# EUROPÄISCHE PATENTSCHRIFT

(11) **EP 1 384 909 B1**
(45) Veröffentlichungstag und Bekanntmachung des Hinweises auf die Patenterteilung: **15.02.2012**
(21) Anmeldenummer: 03013696.4
(22) Anmeldetag: 17.06.2003
(51) Int. Cl.: F16D 13/71, F16D 21/06

(54) **Doppelkupplungsanordnung**
Double clutch assembly
Ensemble à embrayage double

(30) Priorität: 25.07.2002 DE 10233791; 22.11.2002 DE 10254903
(43) Veröffentlichungstag der Anmeldung: 28.01.2004
(73) Patentinhaber: ZF Sachs AG, 97424 Schweinfurt (DE)
(72) Erfinder: Orlamünder, Andreas, Dipl.-Ing., 97422 Schweinfurt (DE); Vogt, Sebastian, Dipl.-Ing., 97616 Bad Neustadt (DE)

(56) Entgegenhaltungen:
- EP-A- 0 931 951
- DE-A- 3 508 512
- DE-A- 10 018 646
- US-A- 5 730 266

## Beschreibung

Die vorliegende Erfindung betrifft eine Doppelkupplungsanordnung, umfassend:
- einen ersten Kupplungsbereich mit einer durch eine erste Kraftbeaufschlagungsanordnung in Richtung auf eine Widerlageranordnung zu beaufschlagbaren ersten Anpressplatte,
- einen zweiten Kupplungsbereich mit einer durch eine zweite Kraftbeaufschlagungsanordnung in Richtung auf eine Widerlageranordnung zu beaufschlagbaren zweiten Anpressplatte,
- eine Kopplungsanordnung zur Ankopplung der Widerlageranordnung an ein Antriebsorgan.

Bei derartigen Doppelkupplungsanordnungen liegt derjenige Bereich, welcher über die Kopplungsanordnung an ein Antriebsorgan, beispielsweise an eine Kurbelwelle einer Brennkraftmaschine, anzubinden ist, im Allgemeinen nicht an einen axialen Endbereich der Kupplungsanordnung, wie dies bei herkömmlichen Einfachkupplungen der Fall ist, sondern liegt in einem zentralen Bereich zwischen den beiden Kupplungsbereichen. Dies erschwert die Anbindung der Doppelkupplungsanordnung vermittels einer Kopplungsanordnung, insbesondere auch unter Berücksichtigung der Tatsache, dass diese Anbindung im Allgemeinen in einem Bereich erfolgt, welcher durch eine Getriebeglocke bzw. Kupplungsglocke zumindest teilweise überdeckt ist.

Aus der DE 100 18 646 A1 sind bereits Doppelkupplungsanordnungen bekannt, welche einen ersten Kupplungsbereich mit einer durch eine erste Kraftbeaufschlagungsanordnung in Richtung auf eine Widerlageranordnung zu beaufschlagbaren ersten Anpressplatte, einen zweiten Kupplungsbereich mit einer durch eine zweite Kraftbeaufschlagurgsanordnung in Richtung auf eine Widerlageranordnung zu beaufschlagbaren zweiten Anpressplatte, und eine Kopplungsanordnung zur Ankopplung der Widerlageranordnung an ein Antriebsorgan aufweisen. Die Kopplungsanordnung ist hierbei in Form einer axialen Schraubverbindung ausgestaltet.

Es ist die Aufgabe der vorliegenden Erfindung, eine Doppelkupplungsanordnung so auszugestalten, dass eine einfach herstellbare bzw. lösbare, gleichwohl jedoch sicher wirkende Ankopplung an ein Antriebsorgan möglich ist.

Diese Aufgabe wird gelöst durch eine Doppelkupplungsanordnung, umfassend:
- einen ersten Kupplungsbereich mit einer durch eine erste Kraftbeaufschlagungsanordnung in Richtung auf eine Widerlageranordnung zu beaufschlagbaren ersten Anpressplatte,
- einen zweiten Kupplungsbereich mit einer durch eine zweite Kraftbeaufschlagungsanordnung in Richtung auf eine Widerlageranordnung zu beaufschlagbaren zweiten Anpressplatte,
- eine Kopplungsanordnung zur Ankopplung der Widerlageranordnung an ein Antriebsorgan, wobei die Kopplungsanordnung umfasst:
- eine Kopplungsplattenanordnung, die in einem radial äußeren ersten Kopplungsabschnitt eine Verzahnungsformation aufweist, welche mit einem Gegen-Verzahnungsformation an der Widerlageranordnung in Drehkopplungseingriff steht.

Durch das Bereitstellen von miteinander in Eingriff bringbaren Verzahnungs- bzw. Gegen-Verzahnungsformationen müssen zusätzliche Kopplungsorgane nicht angewandt werden, so dass alleine durch axiales Aufeinanderzubewegen eine Ankopplung erlangt werden kann.

Um bei Auftreten von Drehungleichförmigkeiten das Entstehen von Klappergeräuschen im Bereich der Verzahnungen zu vermeiden, wird vorgeschlagen, dass die Verzahnungsformation und die Gegen-Verzahnungsformation im gegenseitigen Eingriff vorgespannt sind. Hierbei kann es weiter hilfreich sein, wenn die Verzahnungsformation sich zu einem freien Endbereich hin verjüngende Zähne aufweist, die in entsprechend sich verjüngende Ausnehmungsbereiche der Gegen-Verzahnungsformation eingreifen.

Bei der erfindungsgemäßen Doppelkupplungsanordnung an eine zumindest in einem gewissen Ausmaß Taumelbewegungen unterdrückende Ankopplung der Doppelkupplungsanordnung an das Antriebsorgan dadurch erlangt werden, dass die Kopplungsplattenanordnung ein den ersten Kopplungsabschnitt aufweisendes radial äußeres Kopplungsplattenteil umfasst, ein einen zweiten Kopplungsabschnitt aufweisendes radial inneres Kopplungsplattenteil umfasst, wobei im Bereich des zweiten Kopplungsabschnitts die Kopplungsplattenanordnung an das Antriebsorgan angekoppelt oder ankoppelbar ist, und eine elastische Verbindungsanordnung zur eine Relativbewegung zulassenden Verbindung des radial äußeren Kopplungsplattenteils mit dem radial inneren Kopplungsplattenteil umfasst.

Die Erfindung wird nachfolgend mit Bezug auf die beiliegenden Zeichnungen anhand bevorzugter Ausgestaltungsformen detailliert beschrieben. Es zeigt:
- Fig. 1: eine Teil-Längsschnittansicht einer nicht erfindungsgemäßen Dop- pelkupplungsanordnung;
- Fig. 2: einen separat ausgebildeten, als Blechumformteil bereitgestellten Zahnkranz;
- Fig. 3: eine der Fig. 1 entsprechende Ansicht einer alternativen Aus- gestaltungsform;
- Fig. 4: eine Detailansicht einer Abwandlung der in Fig. 3 dargestellten Doppelkupplungsanordnung;
- Fig. 5: eine weitere Detailansicht einer Abwandlung der in Fig. 3 dargestellten Doppelkupplungsanordnung;
- Fig. 6: eine weitere der Fig. 1 entsprechende Ansicht einer alternativen Ausgestaltungsform;
- Fig. 7: eine weitere der Fig. 1 entsprechende Ansicht einer alternativen Ausgestaltungsform;
- Fig. 8: eine weitere der Fig. 1 entsprechende Ansicht einer alternativen Ausgestaltungsform;
- Fig. 9: eine Detailansicht einer Abwandlung der in Fig. 8 dargestellten Ausgestaltungsform;
- Fig. 10: eine Ausgestaltung einer erfindungsgemäßen Dop- pelkupplungsanordnung;
- Fig. 11: eine Detailansicht einer Abwandlung der in Fig. 10 dargestellten Ausgestaltungsform;
- Fig. 12: eine Variante zur Vermeidung von Klappergeräuschen in ineinander eingreifenden Verzahnungen;
- Fig. 13: die in Fig. 12 gezeigte Anordnung im zusammengefügten Zustand;
- Fig. 14: eine alternative Ausgestaltungsform einer Doppelkupplungs- anordnung.

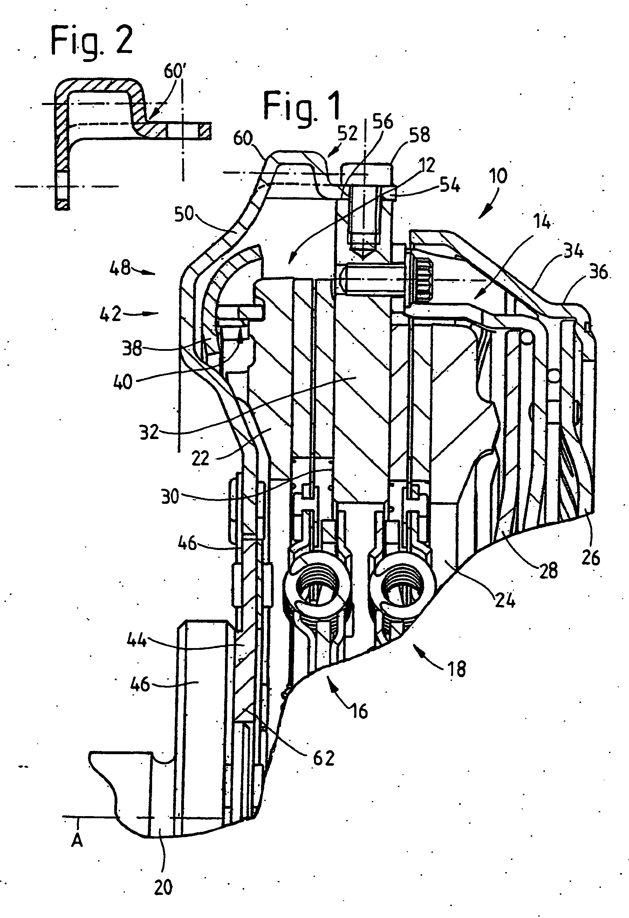

In Fig. 1 ist eine nicht erfindungsgemäße Doppelkupplungsanordnung allgemein mit 10 bezeichnet. Die Doppelkupplungsanordnung 10 umfasst zwei Kupplungsbereiche 12, 14, über welche wahlweise eine von zwei Getriebeeingangswellen bzw. jeweils eine mit diesen Eingangswellen drehfest gekoppelte Kupplungsscheibe 16 oder 18 mit einem Antriebsorgan 20, beispielsweise einer Kurbelwelle einer Brennkraftmaschine, drehfest verbunden werden kann.

Die beiden Kupplungsbereiche 12, 14 umfassen jeweils eine Anpressplatte 22 bzw. 24, die unter der Krafteinwirkung einer jeweiligen Kraftbeaufschlagungsanordnung 26 bzw. 28 in Richtung auf eine eine Widerlageranordnung 30 für die beiden Kupplungsbereiche 12, 14 bereitstellende Zwischenplatte 32 zu vorgespannt werden können, um dadurch die den jeweiligen Kupplungsbereichen 12, 14 zugeordneten Kupplungsscheiben 16, 18 zwischen der Anpressplatte 22 bzw. 24 und der Zwischenplatte 32 zur Drehmomentübertragung einzuklemmen.

Die Kraftbeaufschlagungsanordnungen 26, 28 können beispielsweise als Hebelanordnungen ausgebildet sein, durch welche eine Einrückkraft, bereitgestellt durch einen Betätigungsmechanismus, auf die verschiedenen Anpressplatten 22 bzw. 24 übertragen wird. Es ist jedoch auch möglich, als Kraftbeaufschlagungsanordnungen Kraftspeicher, beispielsweise Membranfedern, einzusetzen, welche selbst eine Einrückkraft bereitstellen und zur Durchführung von Ausrückvorgängen durch einen Betätigungsmechanismus beaufschlagt werden. Die Kraftbeaufschlagungsanordnung 28 des zweiten Kupplungsbereichs 14 stützt sich radial außen an einem mit der Zwischenplatte 30 fest verbundenen Gehäuseteil 34 ab und beaufschlagt radial weiter innen die Anpressplatte 24. Die Kraftbeaufschlagungsanordnung 26 des ersten Kupplungsbereichs 12 beaufschlagt in ihrem radial äußeren Bereich ein Kraftübertragungselement 36, ist in ihrem radial weiter innen gelegenen Bereich an dem Gehäuseteil 34 abgestützt und wird in ihrem radial inneren, nicht dargestellten Bereich durch einen entsprechenden Mechanismus zur Durchführung von Betätigungsvorgängen beaufschlagt. Das Kraftübertragungselement 36 überträgt die Einrückkraft über nicht dargestellte Elemente, beispielsweise Zuganker, auf ein weiteres ringartiges Kraftübertragungselement 38, das dann beispielsweise über eine Verschleißnachstellvorrichtung 40 die Anpressplatte 22 des ersten Kupplungsbereichs 12 beaufschlagt.

Insofern der vorangehend nur ganz allgemein beschriebene Aufbau der verschiedenen Kupplungsbereiche 12, 14 der Doppelkupplungsanordnung 10 betroffen ist, ist es selbstverständlich, dass hier verschiedenste Variationen vorgesehen sein können, insbesondere hinsichtlich der Kraftübertragung auf die Anpressplatten, dem Bereitstellen von Verschleißnachstellvorrichtungen, dem Aufbau der Kupplungsscheiben und dem Aufbau der Anpressplatten. Von Bedeutung ist jedoch, dass die Zwischenplatte 32 vorgesehen ist, die in Richtung der Drehachse A im Wesentlichen zwischen den beiden Kupplungsbereichen 12, 14 liegt bzw. die Schnittstelle zwischen diesen beiden Kupplungsbereichen bildet. Diese Zwischenplatte 32 wird dann, wie im Folgenden detailliert beschrieben, an das Antriebsorgan 20 zur Drehmomentenübertragung von einem Antriebsorgan auf die Zwischenplatte 32 und von dieser dann in die Kupplungsbereiche 12, 14 gekoppelt.

Bei der in Fig. 1 dargestellten Ausgestaltungsform ist eine Kopplungsanordnung 42 vorgesehen, welche die Ankopplung der Zwischenplatte 32 an das Antriebsorgan 20 vorsieht. Diese Kopplungsanordnung 42 umfasst ein radial inneres Kopplungsplattenteil 44, das beispielsweise durch mehrere Schraubbolzen, durch Bereitstellen einer Hirth-Verzahnung o. dgl. drehfest an einen Wellenflansch 46 des Antriebsorgans 20 angebunden werden kann. Über mehrere Blattfederelemente 46 oder sonstige elastische Kopplungselemente ist mit dem radial inneren Kopplungsplattenteil 44 ein zusammen mit diesem eine Kopplungsplattenanordnung 48 bereitstellendes radial äußeres Kopplungsplattenteil 50 verbunden. Dieses kann, ebenso wie das radial innere Kopplungsplattenteil 44, als Blechumformteil bereitgestellt sein. Das radial äußere Kopplungsplattenteil 50 weist radial außen einen sich näherungsweise axial erstreckenden Abschnitt 52 auf. In einem axialen Endbereich bildet dieser Abschnitt 52 einen ersten Kopplungsabschnitt 54 der Kopplungsplattenanordnung 48, mit welchem diese eine Außenumfangsfläche 56 der ringscheibenartig aufgebauten Zwischenplatte 32 übergreift. Durch eine Mehrzahl von über den Umfang verteilt angeordnete Schraubbolzen 58 ist im Bereich dieses ersten Kopplungsabschnitts 54 die Kopplungsplattenanordnung 48 an die Zwischenplatte 32 fest angebunden. Axial anschließend an diesen ersten Kopplungsabschnitt 54 ist in das radial äußere Kopplungsplattenteil 50 ein Zahnkranz 60 eingeformt. Somit stellt dieses Kopplungsplattenteil 50 mit seinem im Wesentlichen axial sich erstreckenden radial äußeren Bereich 52 zwei elementare Baugruppen bereit, nämlich den ersten Kopplungsabschnitt 54 einerseits und den Zahnkranz 60 andererseits, der beim Umformungsvorgang des ersten Kopplungsplattenteils 50 beispielsweise durch Einrollen, also durch plastische Verformung bereitgestellt werden kann.

Durch die in Fig. 1 dargestellte Ausgestaltungsform einer Doppelkupplungsanordnung 10 bzw. einer Kopplungsanordnung 42 derselben wird eine sehr einfach herstellbare Ankoppelbarkeit gewährleistet, bei welcher von radial außen her gleichzeitig Zugriff zu mehreren der Schraubbolzen 58 bestehen kann. Durch das Miteinführen der elastischen Blattfederelemente 46 wird gleichzeitig eine Bewegungsentkoppelbarkeit des ersten Kopplungsabschnitts 54 und eines zweiten Kopplungsabschnitts 62, in welchem die Ankopplung an das Antriebsorgan 20 realisiert ist, ermöglicht, so dass vor allem das Übertragen bzw. das Auftreten von Taumelbewegungen im Bereich der beiden Kupplungsbereiche 12, 14 vermieden werden kann. Es sei hier erwähnt, dass diese Elastizität auch beispielsweise dadurch realisiert sein kann, dass die beiden Kopplungsplattenteile 44, 50 miteinander integral verbunden sind und zwar durch bei einem Stanzvorgang eines Blechrohlings gebildete, eine Elastizität bereitstellende Verbindungsstegabschnitte.

In Fig. 2 ist ein Zahnkranz 60' gezeigt, der hier als separates Bauteil ausgebildet ist und nicht integral mit dem radial äußeren Kopplungsplattenteil 50 hergestellt, sondern mit diesem durch Vernietung o. dgl. verbunden werden kann.

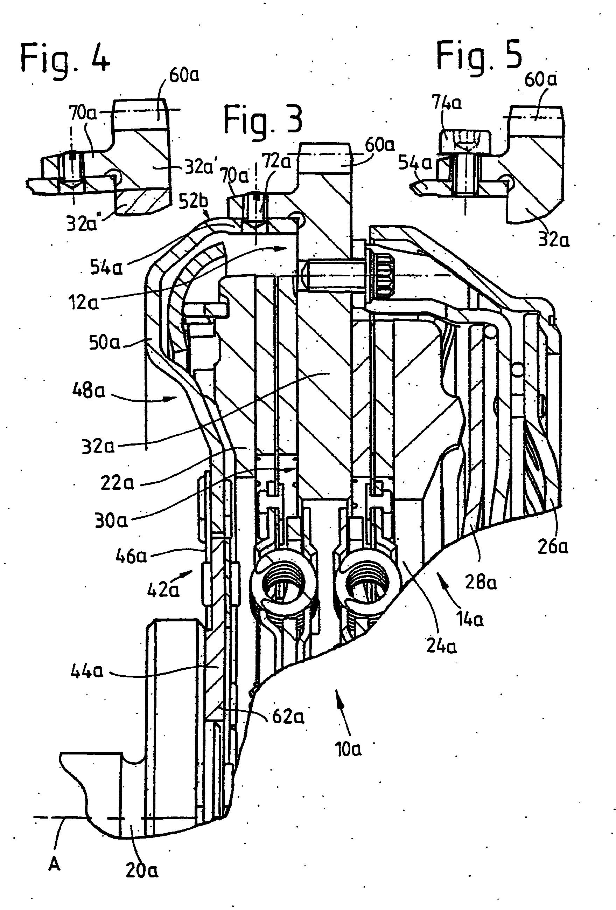

Die Fig. 3 - 5 zeigen eine alternative Ausgestaltungsform einer Doppelkupplungsanordnung, wobei hier Komponenten, welche vorangehend beschriebenen Komponenten hinsichtlich Aufbau bzw. Funktion entsprechen, unter Hinzufügung eines Anhangs "a" bezeichnet sind.

Bei der in Fig. 3 dargestellten Ausgestaltungsform ist im radial äußeren Bereich der Zwischenplatte 32a an einer axialen Seite derselben, nämlich der dem Antriebsorgan 20a zugewandt zu positionierenden Seite, eine beispielsweise ringartig um die Drehachse A umlaufende Axialvorsprungsformation 70a ausgebildet. Das radial äußere Kopplungsplattenteil 50a weist in seinem radial äußeren Bereich wieder den sich im Wesentlichen axial erstreckenden Bereich 52a auf, der den ersten Kopplungsabschnitt 54a bereitstellt. Im Bereich dieses näherungsweise zylindrisch ausgebildeten ersten Koppfungsabschnitts 54a ist das Kopplungsplattenteil 50a axial in die Vorsprungsformation 70a eingeführt, so dass der erste Kopplungsabschnitt 54a an einer nach radial innen weisenden Oberfläche bzw. Innenumfangsfläche der Vorsprungsformation 70a anliegt. In die Vorsprungsformation 70a sind mehrere als Madenschrauben 72a ausgebildete Kopplungsorgane eingeschraubt, wobei diese Madenschrauben 72a nach radial innen bis in zugehörige Öffnungen im ersten Kopplungsabschnitt 54a greifen. Auf diese Art und Weise wird sowohl eine axiale Kopplung als auch eine Umfangskopplung zwischen der Kopplungsplattenanordnung 48a und der Zwischenplatte 32a erlangt. Ferner ist bei dieser Ausgestaltungs vorgesehen, dass der Anlasserzahnkranz 60a am radial äußeren Bereich der Zwischenplatte 32a integral ausgebildet ist.

In Fig. 4 ist eine Ausgestaltungsform gezeigt, bei welcher im radial äußeren Bereich die Zwischenplatte 32a geteilt ist. Der Anlasserzahnkranz 60a ist nunmehr an einem äußeren Zwischenplattenteil 32a' ausgebildet, das beispielsweise auf ein inneres Zwischenplattenteil 32a" aufgeschrumpft ist. Die Axialvorsprungsformation 70a ist am äußeren Zwischenplattenteil 32a' ausgebildet.

Bei der in Fig. 5 dargestellten Ausgestaltungsform sind als Kopplungsorgane normale Schraubbolzen 74a vorgesehen, die beispielsweise zum Einführen eines Inbusschlüssels eine Innensechskantöffnung aufweisen.

Die in den Fig. 3 - 5 dargestellte Ausgestaltungsform bzw. die Variationen derselben weisen den Vorteil auf, dass, ebenso wie bei der in Fig. 1 gezeigten Ausgestaltungsform, eine radiale Zentrierung der Zwischenplatte 32a bezüglich der Kopplungsanordnung 42a und somit auch bezüglich des Antriebsorgans 20a realisiert ist. Ferner ist es hier vorteilhaft, dass bei Fliehkrafteinwirkung das im Allgemeinen als Blechumformteil bereitgestellte Kopplungsplattenteil 50a sich nach radial außen verstärkt gegen die Vorsprungsformation 70a anlegen wird, wodurch eine noch bessere Kopplungswirkung ermöglicht wird.

Es sei darauf hingewiesen, dass selbstverständlich bei der in Fig. 3 dargestellten Ausgestaltungsform sowohl der Kopplungsabschnitt 54a als auch die Vorsprungsformation 70a in Umfangsrichtung unterbrochen sein kann, d.h. jeweils mehrere axial vorstehende Abschnitte umfassen kann.

Selbstverständlich ist es auch möglich, die Vorsprungsformation 70a und den Kopplungsabschnitt 54a so aufeinander abzustimmen, dass der Kopplungsabschnitt 54a die Vorsprungsformation 70a radial außen übergreift und an dieser von radial außen anliegt.

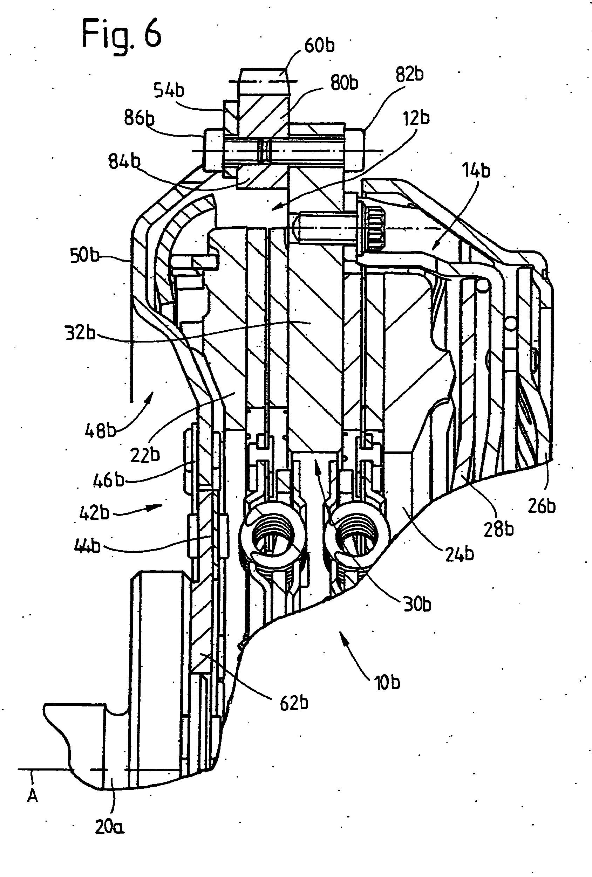

Eine weitere alternative Doppelkupplungsanordnung ist in Fig. 6 gezeigt. Komponenten, welche vorangehend beschriebenen Komponenten hinsichtlich Aufbau bzw. Funktion entsprechen, sind mit dem gleichen Bezugszeichen unter Hinzufügung eines Anhangs "b" bezeichnet.

Bei der in Fig. 6 dargestellten Ausgestaltungsform ist ein Zwischenkopplungsring 80b vorgesehen, der gleichzeitig auch den Anlasserzahnkranz 60b aufweist bzw. bildet. Durch den radial äußeren Bereich der Zwischenplatte 32b hindurch sind mehrere Schraubbolzen 82b geführt bzw. geschraubt und sind in eine jeweils zugeordnete Innengewindeöffnung 84b in den Zwischenkopplungsring 80b eingeschraubt. Der erste Kopplungsabschnitt 54b des Kopplungsplattenteils 50b ist nunmehr als sich im Wesentlichen radial erstreckender Bereich bereitgestellt und weist ebenfalls Durchtrittsöffnungen auf, durch welche Schraubbolzen 86b hindurch und ebenfalls in die Innengewindeöffnungen 84b eingeschraubt sind. Man erkennt somit, dass zumindest ein Teil der Innengewindeöffnungen 84b jeweils sowohl einen Schraubbolzen 82b als auch einen Schraubbolzen 86b aufnimmt.

Bei dieser Ausgestaltungsform ist neben der einfach herstellbaren Kopplung der Zwischenplatte 32b mit der Kopplungsanordnung 42b auch ein einfach herstellbarer Aufbau möglich, da sowohl die Zwischenplatte 32b als auch der den Zahnkranz 60b bereitstellende Zwischenkopplungsring 80b als ebene, im Wesentlichen keine axialen Vorsprünge bereitstellende Bauteile ausgeführt sein können.

Bei dieser Ausgestaltungsform könnten selbstverständlich die jeweils in eine Innengewindeöffnung 84b eingeschraubten Schraubbolzen 82b, 86b ersetzt werden durch Nietbolzen, welche durch die Zwischenplatte 32b, den Zwischenkopplungsring 80b und den ersten Kopplungsabschnitt 54b hindurch geführt sind. In diesem Falle müssen die im Zwischenkoppiungsring 80b vorgesehenen Öffnungen nicht mit Innengewinde versehen sein. Des Weiteren ist es selbstverständlich möglich, dass für die Schraubbolzen 82b einerseits und 86b andererseits zumindest zum Teil in Umfangsrichtung versetzt liegende Innengewindeöffnungen bereitgestellt sind.

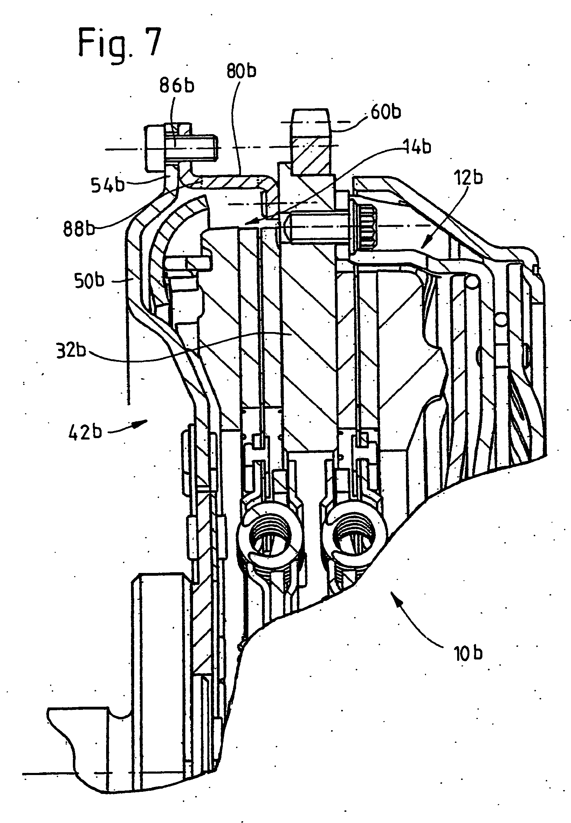

In Fig. 7 ist eine Abwandlung der in Fig. 6 gezeigten Ausgestaltungsform dargestellt. Auch hier umfasst die Kopplungsanordnung 42b einen Zwischenkopplungsring 80b, der an der Zwischenplatte 32b einerseits, beispielsweise durch Vernietung oder Verschraubung, festgelegt ist, und an dem sich im Wesentlichen radial erstreckenden ersten Kopplungsabschnitt 54b des Kopplungsplattenteils 50b andererseits beispielsweise durch Schraubbolzen 86b oder durch Vernietung o. dgl. festgelegt ist. Der Zahnkranz 60b kann hier wieder als separates Bauteil bereitgestellt sein und kann beispielsweise auf den Außenumfangsbereich der Zwischenplatte 32b aufgeschrumpft sein. Um die Belüftung der Doppelkupplungsanordnung gemäß Fig. 7 zu verbessern, können in dem Zwischenringelement 80b mehrere schematisch angedeutete Durchtrittsöffnungen oder Aussparungen 88b vorgesehen sein.

Das in der Fig. 7 dargestellte Zwischenringelement 80b kann in einfacher und kostengünstiger Art und Weise als Blechumformteil bereitgestellt werden.

Es sei darauf hingewiesen, dass bei den in den Fig. 6 und 7 dargestellten Varianten vorangehend jeweils von einem "Zwischenkopplungsring 80b" gesprochen wurde. Es ist selbstverständlich, dass dieser eine Mehrzahl von Ringsegmenten umfassen kann, die jeweils für sich mit der Zwischenplatte 32b einerseits und dem Kopplungsplattenteil 50b andererseits fest verbunden sind, die ansonsten jedoch untereinander nicht notwendigerweise eine feste Verbindung aufweisen müssen und ggf. auch mit geringem Umfangsabstand zueinander angeordnet sein können. Von Bedeutung ist, dass eine derartige Formation aus mehreren Zwischenkopplungselementen zusammen dann eine über den Umfangsbereich der Doppelkupplungsanordnung 10b sich erstreckende ringartige Konfiguration bilden. Diese könnte beispielsweise auch gebildet sein durch drei einen Winkelabstand von 120° (beispielsweise bezogen auf einen Umfangsmittenbereich derselben) aufweisende Ringsegmente oder beispielsweise durch vier einen Umfangsabstand von 90° (wieder bezogen auf ihren Umfangsmittenbereich) aufweisende Segmente.

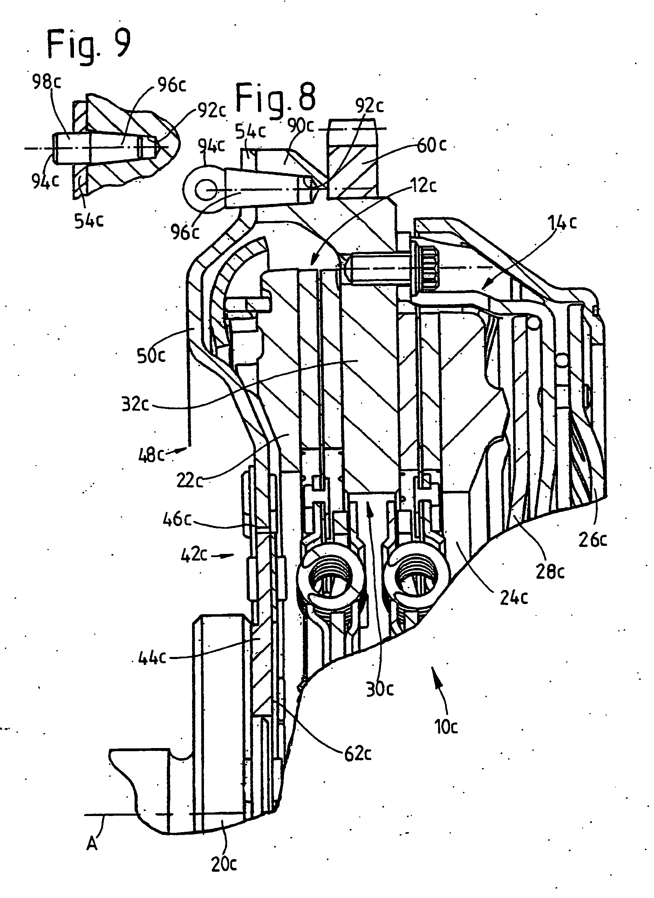

Eine weitere alternative Doppelkupplungsanordnung ist in Fig. 8 dargestellt. Komponenten, welche vorangehend Komponenten hinsichtlich Aufbau bzw. Funktion entsprechen, sind mit dem gleichen Bezugszeichen unter Hinzufügung eines Anhangs "c" bezeichnet.

Bei der in Fig. 8 dargestellten Ausgestaltungsform ist im radial äußeren Bereich an der Zwischenplatte 32c ein in Umfangsrichtung beispielsweise vollständig durchlaufender, möglicherweise auch segmentartig ausgebildeter axialer Ansatz 90c ausgebildet. An diesem liegt axial der erste Kopplungsabschnitt 54c der Kopplungsplattenanordnung 48c an, welcher Kopplungsabschnitt 54c wiederum als sich im Wesentlichen radial erstreckender Endbereich des Kopplungsplattenteils 50c ausgebildet ist. Über den Umfang verteilt weist der Ansatz 90c mehrere sich zu ihrem Bodenbereich hin verjüngende Befestigungsöffnungen 92c aus, die beispielsweise eine rotationssymmetrische, also kegelstumpfartige Konfiguration aufweisen können, grundsätzlich aber auch keilförmig aufeinander zulaufende Oberflächen bereitstellen können. In diese Befestigungsöffnungen 92c sind Kopplungsorgane 94c mit ihren sich entsprechend verjüngenden Befestigungsabschnitten 96c eingesetzt, und zwar mit einer solchen Kraft eingesetzt, dass sie reibschlüssig darin gehalten sind. Die sich verjüngenden Befestigungsabschnitte 96c durchsetzen auch die im ersten Kopplungsabschnitt 54c ausgebildeten Öffnungen, so dass durch die sich nach außen hin erwei ternde Konfiguration der Befestigungsabschnitte 96c gleichzeitig auch eine axiale Fixierung des Kopplungsplattenteils 50c im Bereich des ersten Kopplungsabschnitts 54c an der Zwischenplatte 32c realisiert ist.

Um beim Zusammenfügen die im ersten Kopplungsabschnitt 54c vorgesehenen Öffnungen mit den Befestigungsöffnungen 92c in definierter Position ausgerichtet zu halten, können Zentrierstifte vorgesehen sein, die eine bestimmte Relativdrehlage der Kopplungsplattenanordnung 48c bezüglich der Zwischenplatte 32c vorgeben.

In Fig. 9 ist eine Ausgestaltungsform dargestellt, bei welcher die Kopplungsorgane 94c nur in ihrem in den Öffnungen 92c zu positionierenden Befestigungsabschnitt 96c sich verjüngend ausgebildet sind. Der die Öffnungen im ersten Kopplungsabschnitt 54c durchsetzende Abschnitt 98c ist mit zylindrischem Außenumfang ausgebildet, so dass in Richtung zum freien, nach außen hin offen liegenden Ende der Kopplungsorgane 94c keine Umfangserweiterung desselben auftritt. Bei dieser Ausgestaltungsform können die Kopplungsorgane 96c vor dem Zusammenfügen der Zwischenplatte 32c mit der Kopplungsplattenanordnung 48c an der Zwischenplatte 32c festgelegt werden und dann beim Heranführen der Kopplungsplattenanordnung 48c in die zugehörigen Öffnungen eingeschoben werden, so dass gleichzeitig diese Kopplungsorgane 94c eine Zentrierfunktion übernehmen. Während bei der Ausgestaltungsform gemäß Fig. 8 die Kopplungsorgane 94c in ihrem außen freiliegenden Bereich einen ösenartigen Ansatz zum Entfernen derselben aufweisen, kann bei der Ausgestaltungsform der Fig. 9 die Zwischenplatte 32c von der Kopplungsplattenanordnung 48c in einfacher Art und Weise durch axiales Auseinanderbewegen getrennt werden.

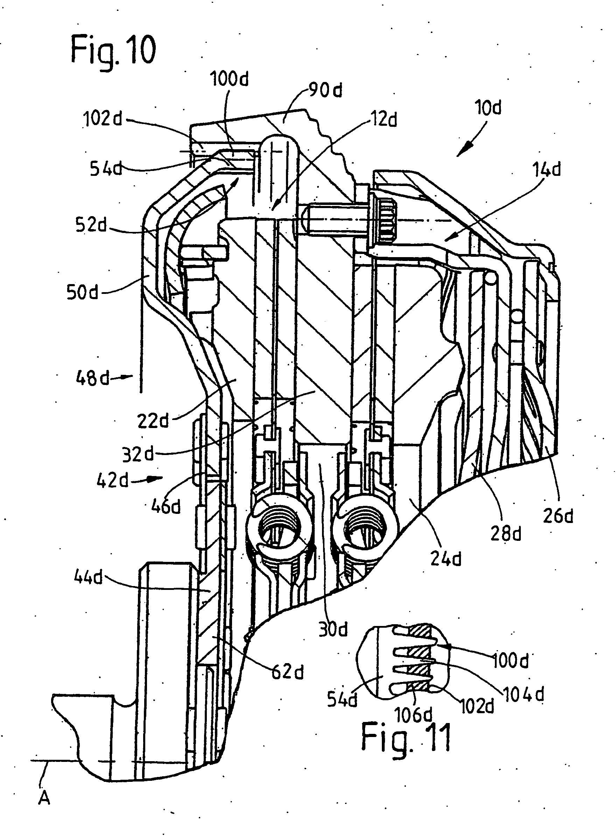

Eine erfindungsgemäße Doppelkupplungsanordnung ist in Fig. 10 gezeigt. Komponenten, welche vorangehend beschriebenen Komponenten hinsichtlich Aufbau bzw. Funktion entsprechen, sind mit dem gleichen Bezugszeichen unter Hinzüfügung des Anhangs "d" bezeichnet.

Bei der in Fig. 10 dargestellten Ausgestaltungsform ist am äußeren Kopplungsplattenteil 50d wieder der näherungsweise axial sich erstreckende radial äußere Bereich 52d vorgesehen, welcher zum Bereitstellen des ersten Kopplungsabschnitts 54d mit einer Außenstirnverzahnung 100d ausgebildet ist. Diese Außenstirnverzahnung 100d kann beispielsweise beim Umformungsvorgang des aus Blechmaterial aufgebauten äußeren Kopplungsplattenteils 50d miteingeformt werden. Die Zwischenplatte 32d weist wiederum den axialen Ansatz 90d auf, der nunmehr an einer Innenumfangsseite eine Innenstirnverzahnung 102d aufweist. Durch axiales Ineinandereinfügen können die beiden Verzahnungen 100d, 102d in Eingriff miteinander gebracht werden, so dass ohne dem Erfordernis, zusätzliche Kopplungsorgane o. dgl. bereitstellen zu müssen, eine drehfeste Ankopplung der Zwischenplatte 32d an die Kopplungsplattenanordnung 48d erlangt werden kann. Selbstverständlich ist es möglich, das Kopplungsplattenteil 50d mit einer Innenstirnverzahnung auszugestalten und stattdessen an der Zwischenplatte 32d, beispielsweise im Bereich des axialen Ansatzes 90d eine Außenstirnverzahnung bereitzustellen.

Um dafür zu sorgen, dass die beiden Verzahnungen 100d, 102d bezüglich einander möglichst wenig Bewegungsspiel aufweisen, wodurch vermieden werden kann, dass bei Auftreten von Drehungleichförmigkeiten Anschlag- bzw. Klappergeräusche und ein entsprechender Verschleiß im Bereich der Verzahnungen 100d, 102d erzeugt werden, ist es vorteilhaft, die beiden Verzahnungen unter Vorspannung gegeneinander anliegen zu lassen. Bei der in Fig. 10 dargestellten Variante kann dies durch entsprechende Formgebung bzw. Bemessung der Verzahnungen 100d, 102d erfolgen.

In Fig. 11 ist hierzu eine Variante gezeigt, in welcher am Kopplungsplattenteil 50d im Bereich des ersten Kopplungsabschnitts 54d eine Verzahnung 100d mit sich näherungsweise in Richtung zu ihrem freien Ende axial erstreckenden und sich beispielsweise konisch verjüngenden Zähnen 104d vorgesehen ist. An der Zwischenplatte 32d ist dann die Verzahnung 102d mit beispielsweise sich näherungsweise radial erstreckenden Zähnen 106d ausgebildet, zwischen welchen in Anpassung an die sich verjüngende Form der Zähne 104d entsprechend sich verjüngende Ausnehmungen gebildet sind. Durch leichtes axiales Vorspannen der beiden Verzahnungen 100d, 102d bezüglich einander kann hier ein spielfreier Eingriff der beiden Verzahnungen erlangt werden.

Es ist selbstverständlich, dass auch bei Ausgestaltung der Verzahnungen 100d, 102d als Stirnverzahnungen, wie in Fig. 10 gezeigt, durch entsprechende sich verjüngende Ausgestaltung der Zähne bzw. der jeweilige Zähne aufnehmenden Ausnehmungen ein spielfreier Eingriff erlangt werden kann.

Von besonderem Vorteil bei der in den Fig. 10 und 11 dargestellten Ausgestaltungsform ist, dass aufgrund der kleinen Teilung der Verzahnungen beim Zusammenfügen der Zwischenplatte 32d mit dem Kopplungsplattenteil 50d bereits ein geringfügiges Relativdrehen dieser beiden Komponenten ausreicht, um die Verzahnungen 100d, 102d in eine ein Ineinandereintreten zulassende Relativpositionierung zu bringen.

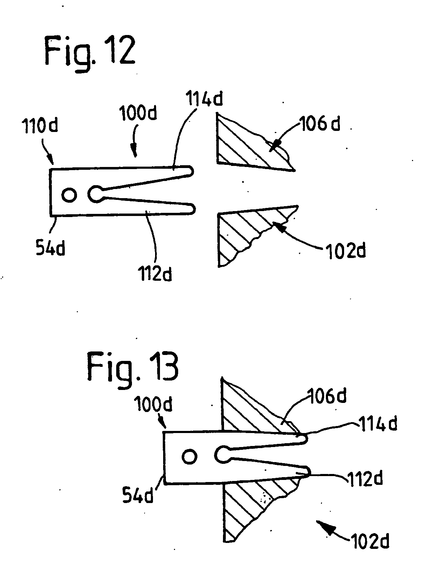

Die Figuren 12 und 13 zeigen eine weitere Variante, mit welcher die beiden ineinander eingreifenden Verzahnungen 100d, 102d gegen Klappergeräusche geschützt werden können. So kann am Kopplungsabschnitt 54d entweder als separates Bauteil festgelegt, beispielsweise durch Nieten, Schrauben, Stifte oder Verschweißung, Verlötung oder Verklebung, an zumindest einem Umfangsbereich, an welchem normalerweise einer der Zähne 104d in Fig. 11 vorgesehen wäre, das in Fig. 12 allgemein mit 110d bezeichnete Federelement vorgesehen sein. Dieses Federelement 110d kann aber selbstverständlich auch als integraler Bestandteil des Kopplungsabschnitts 54d bereitgestellt sein. Das Federelement 100d weist zwei Federschenkel 112d, 114d auf, die auf Grund der Elastizität des Materials des Federelements 110d, beispielsweise Blechmaterial oder Kunststoffmaterial, aufeinander zu verformt werden können. Beim Ineinandereinführen der beiden Verzahnungen 100d, 102d tritt dieses Federelement 110d oder treten ggf. mehrere derartige Federelemente 110d in die Zwischenräume zwischen den einzelnen Zähnen 106d ein, welche, wie in Fig. 12 auch erkennbar, in der Einschubrichtung sich verjüngend ausgebildet sind. Dabei werden die Federschenkel 112d, 114d aufeinander zu verbogen, so dass das Federelement unter Vorspannung in der Aussparung zwischen zwei Zähnen 106d gehalten ist. Auf diese Art und Weise kann eine zu Klappergeräuschen führende Umfangsrelativbewegung der beiden miteinander zu koppelnden Bauteile vermieden werden. Gleichwohl bleibt die einfache Lösbarkeit in axialer Richtung erhalten.

Es sei darauf hingewiesen, dass selbstverständlich auch an Stelle der Zähne 106d entsprechende Federelemente vorgesehen sein können, die in die sich verjüngenden Zwischenräume zwischen zwei Zähnen 104d einschiebbar sind. Weiter ist es möglich, zum Vermeiden von ungewünschten Umfangsbewegungen bzw. von Klappergeräuschen in Lücken zwischen zwei Zähnen sich an der jeweils anderen Verzahnung abstützende Schraubendruckfedern oder sonstige Federelemente einzusetzen, wobei dann zur Bereitstellung des entsprechenden Bauraums verschiedene der auf diese Art und Weise zum Vermeiden von Klappergeräuschen ausgebildeten Verzahnungen schmäler ausgeführt werden müssen.

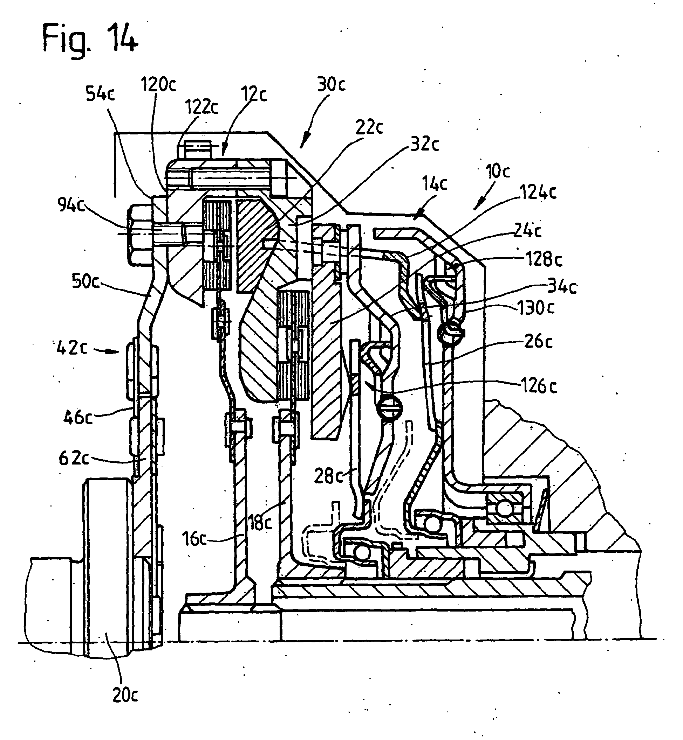

In Fig. 14 ist eine weitere Ausgestaltungsform der Ankopplung einer Doppelkupplung 10c an eine Antriebswelle 20c durch eine Kopplungsanordnung 42c, wie sie vorangehend auch beschrieben und dargestellt worden ist, gezeigt. Auch hier umfasst die Kopplungsanordnung 42c die beiden Kopplungsplattenteile 50c und 62c, die über die Blattfederelemente 46c miteinander gekoppelt sind. Die Ankopplung des Kopplungsplattenteils 50c in seinem näherungsweise radial sich erstreckenden Kopplungsabschnitt 54c erfolgt ähnlich, wie in der in Fig. 8 dargestellten Variante. Auch hier sind im Wesentlichen axial sich erstreckende Kopplungsorgane 94c vorgesehen, die durch Öffnungen im Kopplungsabschnitt 54c hindurch geführt und in die allgemein mit 30c bezeichnete Widerlageranordnung im Bereich einer axial gerichteten Stirnfläche 120c derselben eingesetzt sind. Insbesondere sind als Befestigungsorgane 94c hier Schraubbolzen vorgesehen, die in entsprechende Innengewindeöffnungen in der Widerlageranordnung 30c eingesetzt sind.

Man erkennt hier jedoch, dass die Zwischenplatte 32c hier nur als Widerlagerbereich für die Kupplungsscheibe 18c bzw. die dieser zugeordnete Anpressplatte 24c dient. Für den Kupplungsbereich 12c ist ein weiteres ringartiges Plattenteil 122c vorgesehen, das im radial äußeren Bereich mit der Zwischenplatte 32c verbunden ist, beispielsweise durch Schraubbolzen. Die Zwischenplatte 32c weist in ihrem radial äußeren Bereich ferner eine Ausnehmung auf, in welcher im Wesentlichen die Anpressplatte 22c des Kupplungsbereichs 12c aufgenommen ist. Die durch das Betätigungssystem auf die Kraftbeaufschlagungsanordnung 26c für den Kupplungsbereich 12c ausgeübte Betätigungskraft wird über ein Kraftübertragungselement 124a, welches bereichsweise das Gehäuse 34c und die Zwischenplatte 32c durchsetzt, auf die Anpressplatte 22c übertragen, die somit zur Erlangung eines Einrückzustands in der gleichen Richtung bewegbar ist, wie die Anpressplatte 24c des Kupplungsbereichs 14c. Die Zwischenplatte 32c und das Plattenteil 122c bilden zusammen im Wesentlichen die Widerlageranordnung 30c, an welcher zur Erlangung von Einrückzuständen die auf die Anpressplatten 22c bzw. 24c ausgeübten Betätigungskräfte unter Einklemmung der jeweils zugeordneten Kupplungsscheiben 16c, 18c abgestützt werden. Die Anbindung an die Kopplungsanordnung 42c erfolgt in diesem Beispiel dann im Bereich des Plattenteils 122c.

Es sei noch darauf hingewiesen, dass in Zuordnung zu den beiden Kupplungsbereichen 12c, 14c in diesem Ausgestaltungsbeispiel jeweilige Verschleißnachstellvorrichtungen 126c, 128c vorgesehen sind, die zwischen der Gehäuseanordnung 24c des Kupplungsbereichs 14c und einer entsprechenden Gehäuseanordnung 130c des Kupplungsbereichs 14c und der jeweiligen Kraftbeaufschlagungsanordnung 28c, 26c wirksam sind, so dass bei Auftreten von Verschleiß dafür gesorgt ist, dass die Kraftbeaufschlagungsanordnungen in einer näherungsweise gleichbleibenden Einbaulage verbleiben.

Man erkennt in Fig. 14, dass die verschiedenen vorangehend beschriebenen Prinzipien der Ankopplung der Doppelkupplung im Bereich ihrer Widerlageranordnung vermittels der Kopplungsanordnung an eine Antriebswelle unabhängig davon, wie der interne Aufbau der Kupplungsanordnung bzw. auch der Widerlageranordnung derselben ist, erfolgen kann. D.h., bei der in Fig. 14 gezeigten Doppelkupplung ist es ebenso möglich, alle vorangehend beschriebenen Ankopplungsvarianten zu realisieren.

Vorangehend sind verschiedene Ausgestaltungsformen einer Doppelkupplungsanordnung bzw. einer Kopplungsanordnung für diese beschrieben worden, mit welchen eine leicht zu realisierende Ankopplung der Doppelkupplungsanordnung an eine Antriebswelle o. dgl. erhalten werden kann. Gleichwohl sehen alle Ausgestaltungsformen eine sehr sichere und insbesondere aufgrund der im Bereich der Kopplungsanordnung vorhandenen Elastizität taumelentkoppelte Anbindung vor.

## Patentansprüche

1. Doppelkupplungsanordnung, umfassend:
- einen ersten Kupplungsbereich (12d) mit einer durch eine erste Kraftbeaufschlagungsanordnung (26d) in Richtung auf eine Widerlageranordnung (30d) zu beaufschlagbaren ersten Anpressplatte (22d),
- einen zweiten Kupplungsbereich (14d) mit einer durch eine zweite Kraftbeaufschlagungsanordnung (28d) in Richtung auf eine Widerlageranordnung (30d) zu beaufschlagbaren zweiten Anpressplatte (24d),
- eine Kopplungsanordnung (42d) zur Ankopplung der Widerlagerenordnung (30d) an ein Antriebsorgan (20d), **dadurch gekennzeichnet, dass** die Kopplungsanordnung (42d):
- eine Kopplungsplattenanordnung umfasst (48d), die in einem radial äußeren ersten Kopplungsabschnitt (54d) eine Verzahnungsformation (100d) aufweist, welche mit einem Gegen-Verzahnungsformation (102d) an der Widerlageranordnung (30d) in Drehkopplungseingriff steht.

2. Doppelkupplungsano nung nach Anspruch 1,
**dadurch gekennzeichnet, dass** die Verzahnungsformation (100d) und die Gegen-Verzahnungsformation (1 02d) im gegenseitigen Eingriff vorgespannt sind.

3. Doppelkupplungsanordnung nach Anspruch 1 oder 2,
**dadurch gekennzeichnet,**
**dass** die Verzahnungsformation (100d) sich zu einem freien Endbereich hin verjüngende Zähne (104d) aufweist, die in entsprechend sich verjüngende Ausnehmungsbereiche der Gegen-Verzahnungsformation (102d) eingreifen.

4. Doppelkupplungsanordnung nach einem der Ansprüche 1 bis 3,
**dadurch gekennzeichnet,**
**dass** die Kopplungsplattenanordnung (48) ein den ersten Kopplungsabschnitt (54) aufweisendes radial äußeres Kopplungsplattenteil (50) umfasst, ein einen zweiten Kopplungsabschnitt (62) aufweisendes radial inneres Kopplungsplattenteil (44) umfasst, wobei im Bereich des zweiten Kopplungsabschnitts (62) die Kopplungsplattenanordnung (48) an das Antriebsorgan angekoppelt oder ankoppelbar ist, und eine elastische Verbindungsanordnung (46) zur eine Relativbewegung zulassenden Verbindung des radial äußeren Kopplungsplattenteils (50) mit dem radial inneren Kopplungsplattenteil (44) umfasst.

## Claims

1. Dual clutch arrangement, comprising:
- a first clutch region (12d) with a first pressure plate (22d) which can be loaded in the direction of a counterbearing arrangement (30d) by a first force-exerting arrangement (26d),
- a second clutch region (14d) with a second pressure plate (24d) which can be loaded in the direction of a counterbearing arrangement (30d) by a second force-exerting arrangement (28d),
- a coupling arrangement (42d) for coupling the counterbearing arrangement (30d) to a drive element (20d), **characterized in that** the coupling arrangement (42d):
- comprises a coupling plate arrangement (48d) which, in a radially outer first coupling portion (54d), has a toothing formation (100d) which is in rotationally coupled engagement with a counterpart toothing formation (102d) on the counterbearing arrangement (30d).

2. Dual clutch arrangement according to Claim 1,
**characterized in that** the toothing formation (100d) and the counterpart toothing formation (102d) are preloaded into engagement with one another.

3. Dual clutch arrangement according to Claim 1 or 2,
**characterized**
**in that** the toothing formation (100d) has teeth (104d) which taper towards a free end region and which engage into correspondingly tapering recess regions of the counterpart toothing formation (102d).

4. Dual clutch arrangement according to one of Claims 1 to 3,
**characterized**
**in that** the coupling plate arrangement (48) comprises a radially outer coupling plate part (50) which has the first coupling portion (54), a radially inner coupling plate part (44) which has a second coupling portion (62), wherein the coupling plate arrangement (48) is or can be coupled to the drive element in the region of the second coupling portion (62), and an elastic connecting arrangement (46) for a connection, which permits a relative movement, of the radially outer coupling plate part (50) to the radially inner coupling plate part (44).

## Revendications

1. Agencement de double embrayage, comprenant :
- une première zone d'embrayage (12d) avec un premier plateau de pressage (22d) devant être sollicité par un premier agencement de sollicitation par force (26d) dans la direction d'un agencement de butée (30d),
- une deuxième zone d'embrayage (14d) avec un deuxième plateau de pressage (24d) devant être sollicité par un deuxième agencement de sollicitation par force (28d) dans la direction d'un agencement de butée (30d),
- un agencement d'accouplement (42d) pour l'accouplement de l'agencement de butée (30d) à un organe d'entraînement (20d),
**caractérisé en ce que** l'agencement d'accouplement (42d) comprend un agencement de plateau d'accouplement (48d), qui présente, dans une première portion d'accouplement radialement extérieure (54d), une formation de denture (100d), qui est en prise d'accouplement rotatif avec une formation de denture opposée (102d) sur l'agencement de butée (30d).

2. Agencement de double embrayage selon la revendication 1,
**caractérisé en ce que** la formation de denture (100d) et la formation de denture opposée (102d) sont précontraintes en prise mutuelle.

3. Agencement de double embrayage selon la revendication 1 ou 2,
**caractérisé en ce que**
la formation de denture (100d) présente des dents (104d) se rétrécissant vers une région d'extrémité libre, lesquelles viennent en prise dans des régions de creux se rétrécissant de manière correspondante de la formation de denture opposée (102d).

4. Agencement de double embrayage selon l'une quelconque des revendications 1 à 3,
**caractérisé en ce que**
l'agencement de plateau d'accouplement (48) comprend une partie de plateau d'accouplement (50) radialement extérieure présentant une première portion d'accouplement (54), une partie de plateau d'accouplement radialement intérieure (44) présentant une deuxième portion d'accouplement (62), l'agencement de plateau d'accouplement (48) dans la région de la deuxième portion d'accouplement (62) étant raccordé ou pouvant être raccordé à l'organe d'entraînement, et comprenant un agencement de connexion élastique (46) en vue d'une connexion permettant un mouvement relatif de la partie de plateau d'accouplement (50) radialement extérieure à la partie de plateau d'accouplement radialement intérieure (44).
